# EUROPÄISCHE PATENTSCHRIFT

(11) **EP 0 995 131 B1**
(45) Veröffentlichungstag und Bekanntmachung des Hinweises auf die Patenterteilung: **17.04.2002**
(21) Anmeldenummer: 98943735.5
(22) Anmeldetag: 16.07.1998
(51) Int. Cl.: G01S 15/89

(54) **VERFAHREN UND VORRICHTUNG ZUR AUFNAHME VON ULTRASCHALLBILDERN**
METHOD AND DEVICE FOR SENSING ULTRASOUND IMAGES
PROCEDE ET DISPOSITIF POUR LA PRISE D'IMAGES ULTRASONIQUES

(30) Priorität: 18.07.1997 DE 19730938
(43) Veröffentlichungstag der Anmeldung: 26.04.2000
(73) Patentinhaber: TomTec Imaging Systems GmbH, 85716 Unterschleissheim (DE)
(72) Erfinder: MUMM, Bernhard, D-82291 Mammendorf (DE); WALDINGER, Johannes, D-85521 Ottobrunn (DE); KAISER, Dietmar, D-85368 Moosburg (DE)
(74) Vertreter: Müller, Frank Peter, Dipl.-Ing.
(86) Internationale Anmeldenummer: EP9804429
(87) Internationale Veröffentlichungsnummer: WO9904288

(56) Entgegenhaltungen:
- US-A- 5 582 173
- US-A- 5 645 066

## Beschreibung

Die Erfindung betrifft ein Verfahren und eine Vorrichtung zur Aufnahme von Ultraschallbildern, insbesondere zur Aufnahme und Darstellung dreidimensionaler Ultraschallbilder in Echtzeit, nach dem Oberbegriff des Anspruches 1.

Derartige Verfahren und Vorrichtungen zur Aufnahme von Ultraschallbildern eines Objekts sind bekannt, bei denen ein Ultraschallsender Ultraschallwellen auf ein Objekt abstrahlt, während ein Ultraschallempfänger die von dem Objekt reflektierten Ultraschallwellen empfängt. Zur Aufnahme des Objekts wird der Ultraschallsender bzw. der Ultraschallempfänger entlang dem Objekt verfahren, während einzelne Bild-Teilbereiche des Objekts aufgenommen werden. Diese Bild-Teilbereiche entsprechen im Normalfall einem zeilenweisen Scannvorgang, der das Objekt zeilenweise längs einer Aufnahmerichtung, in die der Ultraschallsender bzw. der Ultraschallempfänger verfahren wird, aufnimmt. Die im Ultraschallgerät erzeugten Bilder lassen sich bei den bekannten Ultraschallgeräten digital oder über einen Videoausgang in ein Nachverarbeitungsgerät bzw. in ein Datenverarbeitungsystem übernehmen. Dort können die Bilder gespeichert oder auch direkt michverarbeitet werden.

Durch den Scannvorgang wird das zu untersuchende Objekt zeilenweise aufgenommen, d.h. es werden einzelne zueinander parallele "Schichten" des Objekts mit Ultraschallwellen beaufschlagt und die entsprechenden reflektierten Ultraschallwellen in dem Ultraschallgerät empfangen. Die empfangenen Ultraschallwellen werden in dem Datenverarbeitungsystem verarbeitet, so daß sich an einem Anzeigegerät ein Grauwertbild ergibt, wobei die einzelnen Grauwerte entsprechend stärker oder schwächer reflektierten Ultraschallwellen entsprechen. Diese Grauwerte liefern Informationen über die einzelnen Schichten des Objekts, d.h. darüber, an welchen Stellen das Objekt beispielsweise Hohlräume oder höher verdichtete Materialbereiche aufweist.

Die einzelnen Schichten des Objekts, d.h. die einzelnen Zeilenaufnahmen des Ultraschall-Scannvorganges werden in dem Datenverarbeitungssystem "übereinandergeschichtet", um dann am Anzeigegerät eine dreidimensionale Darstellung des Objekts zu erhalten. Die unterschiedlichen Abstände verschiedener Bereiche einer Schicht, d.h. die Lage von Hohlräumen oder stärker verdichteten Materialbereichen des Objekts relativ zu dem Ultraschallgerät, erhält man durch die Auswertung der Grauwertinformationen einer jeden Schicht.

Zwischen dem Ultraschallgerät und dem aufzunehmenden Objekt befindet sich ein Schallmedium, welches die Ausbreitung von Ultraschallwellen begünstigt. Dieses Schallmedium stellt sich in dem entsprechenden Grauwertbild durch einen einheitlichen Grauwert dar. Insbesondere lassen sich dadurch die Außenkonturen eines Objekts bestimmen, indem die ersten Grauwertveränderungen an der Grenze zwischen dem Schallmedium und dem zu untersuchenden Objekt in dem Grauwertbild detektiert werden und deren relative Abstände zu dem Ultraschallgerät gemessen werden.

Die Ultraschall-Verfahren benützen eine vordefinierte oder eine zu errechnende Grauwertstufe (Threshold), um im Bild Konturen zu finden. Die Kontureninformationen werden dann in einem Bild gespeichert und ergeben nach Auswertung der Entfernungen zwischen dem Ultraschallgerät bzw. dem Ultraschallkopf und den Außenkonturen des zu untersuchenden Objekts einen dreidimensionalen Bildeindruck.

Diese bekannten Ultraschallverfahren eignen sich beispielsweise zur Untersuchung eines Fötus innerhalb der Bauchhöhle der Mutter oder zur Detektion von Nierensteinen innerhalb des menschlichen Körpers. Zur Aufnahme des zu untersuchenden Objekts, welches innerhalb des menschlichen Körpers liegt, wird das Ultraschallgerät mittels eines Schallmediums, wie beispielsweise Öl oder Wasser mit der Hautoberfläche des menschlichen Körpers verbunden und entlang einer gewünschten Aufnahmerichtung bewegt, während in einheitlichen Zeitabständen Ultraschallbilder aufgenommen werden. Der gesamte Scannvorgang erstreckt sich über einen bestimmten Bereich des menschlichen Körpers, wobei sukzessive während des Scannvorganges einzelne Schichten des zu untersuchenden Objekts innerhalb des Körpers aufgenommen werden. Die einzelnen Ultraschallbilder werden in einem nachfolgenden Datenverarbeitungssystem wieder aneinander gefügt, so daß sich durch "Aufschichten" der einzelnen Bilder ein vollständiges zweioder dreidimensionales Bild des Objekts ergibt.

Bei diesem Verfahren ist es besonders wichtig, daß die Abstände zwischen den einzelnen "Schichten", d.h. zwischen den einzelnen Bild-Teilbereichen des zu untersuchenden Objekts nahezu konstant sind, um eine Längenverzerrung des Gesamtbildes längs der Aufnahmerichtung, d.h. längs der Scannrichtung, zu vermeiden. Um eine gleichmäßige Aufnahmegeschwindigkeit, d.h. eine gleichmäßige Geschwindigkeit des Ultraschallgeräts längs der Aufnahmerichtung während des Scannvorganges zu erhalten, benutzen die Verfahren herkömmlicher Art entweder motorgesteuerte Mechaniken zum Bewegen des Ultraschallgeräts oder magnetische Positionsdetektoren bzw. optische Systeme, um jeweils die genaue Position des Ultraschallgeräts bezüglich der entsprechenden Aufnahme des Bild-Teilbereichs, d.h. der entsprechenden "Schicht" des zu untersuchenden Objekts zu detektieren. Durch die Detektion der genauen Position des Ultraschallgeräts während der Aufnahme einer solchen "Schicht" lassen sich später im Datenverarbeitungssystem die einzelnen Bild-Teilbereiche, d.h. die einzelnen "Schichten" des zu untersuchenden Objekts realitätstreu wieder zusammensetzen. Dadurch lassen sich bei den herkömmlichen Systemen Bildverzerrungen längs der Aufnahmerichtung vermeiden.

Sind die Ausdehnungen einzelner Teilbereiche des Objekts bekannt, beispielsweise die Augenhöhle eines Fötus, können die entsprechend korrespondierenden Bild-Teilbereiche direkt untereinander zugeordnet werden. Wird eine kontinuierliche Aufnahmegeschwindigkeit gewählt, beispielsweise ein besonders gleichmäßiges Scannen durch den untersuchenden Arzt, können sämtliche aufgenommene Bild-Teilbereiche auch ohne der Detektion der genauen Position des Ultraschallgeräts während der Aufnahme direkt untereinander zugeordnet werden. Aus der US 5 582 173 ist ein weiteres Verfahren bekannt, welches nach der Aufnahme der einzelnen Bild-Teilbereiche die einzelnen Bild-Teilbereiche in Bildelemente unterteilt, die sich voneinander durch unterschiedliche Grauwertinformationen (Flecken) unterscheiden, um anschließend anhand von Korrelationsfunktionen die Bildelemente bzw. die unterschiedlichen Grauwertinformationen benachbarter Bild-Teilbereiche miteinander zu korrelieren, um die Abstände zwischen den einzelnen Bild-Teilbereichen untereinander oder die Ausdehnung des Objekts zu schätzen.

Diese herkömmlichen Systeme weisen den Nachteil auf, daß die entsprechenden Ultraschallgeräte sehr aufwendig und kostenintensiv produziert werden müssen, das Aufnahmeverfahren sehr umständlich zu handhaben ist sowie die Bedienperson, also beispielsweise der Arzt bei der Untersuchung eines Fötus im Mutterleib, mit langen Aufnahme- und Nachverarbeitungszeiten zu rechnen hat. Auch mußte das Objekt relativ zu der Bewegungsmechanik des Ultraschallgeräts stillstehen, um die o.g. Bildverzerrungen zu vermeiden. Dementsprechend war es beispielsweise bei medizinischen Anwendungen von Nöten, den Patienten in einem Ultraschallgerät zu fixieren, um anschließend einen kontrollierten und gleichmäßigen Scannvorgang durchführen zu können.

Der Erfindung liegt die Aufgabe zugrunde, die Verfahren der genannten Art dahingehend zu verbessern, daß motorgesteuerte Mechaniken oder Positionserkennungen des Ultraschallkopfes entbehrlich sind und dabei ein einfaches, kostengünstiges und leicht zu handhabendes Ultraschallverfahren bzw. Ultraschallgerät anzugeben.

Der Erfindung liegt außerdem die Aufgabe zugrunde, ein Verfahren zur Aufnahme von Ultraschallbildern anzugeben, bei dem der Ultraschallkopf per Hand geführt und bedient werden kann, ohne daß zusätzliche Vorrichtungen zur Führung oder zur Positionserkennung des Ultraschallkopfes notwendig sind.

Die Erfindung löst die genannte Aufgabe durch die im Kennzeichenteil des Anspruches 1 genannten Merkmale. Vorteilhafte Ausführungsformen der Erfindung sind in den Unteransprüchen gekennzeichnet.

Gemäß der Erfindung wird ein zu untersuchendes Objekt, welches sich beispielsweise in einem unzugänglichen Körper befindet, durch ein Ultraschallgerät aufgenommen. Dabei wird der Ultraschallkopf, welcher vorteilhafterweise den Ultraschallsender und den Ultraschallempfänger enthält, längs einer Aufnahmerichtung bewegt, während einzelne Bild-Teilbereiche des Objekts, d.h. einzelne "Schichten" des Objekts aufgenommen werden. Diese Schichten werden in einem Datenverarbeitungssystem gespeichert und anhand der oben beschriebenen Grauwertanalyse ausgewertet. Anschließend werden die Schichten anhand der aufgenommenen Reihenfolge wieder zusammengesetzt, so daß sich ein Ultraschallbild des zu untersuchenden Objekts ergibt. Das resultierende Bild kann zwei- oder dreidimensional dargestellt werden, ev. sind auch durch die Aneinanderreihung und Darstellung einer Vielzahl dieser zwei- oder dreidimensionalen Bilder bewegte Bilder, sogenannte vierdimensionale Bilder, möglich. Die Bilder können auch farblich gekennzeichnet werden, um einen für die Bedienperson leichter erkennbaren Eindruck des zu untersuchenden Objekts zu erreichen (Flußdarstellung). Dabei werden von einer Stelle des Objekts, welches sich bewegt, mehrere Aufnahmen erstellt, wobei die entsprechenden Aufnahmen (eine Vielzahl von Bild-Teilbereichen) eines Bewegungszustandes des Objekts jeweils zu einem resultierenden Bild zusammengesetzt werden. Die Vielzahl von resultierenden Bildern ergeben dann in Abfolge eine bewegte Darstellung des Objekts (Filmprojektion).

Zur Vermeidung von Bildverzerrungen längs der Aufnahmerichtung wird die Ausdehnung des Objekts insofern bestimmt, als Ultraschallwellen ausgewertet werden, die von einem zu den aufgenommenen Bild-Teilbereichen im wesentlichen orthogonalen Auswerte-Teilbereich reflektiert werden. Diese Ultraschallwellen werden von dem Ultraschallkopf detektiert, in dem dieser im wesentlichen um ca. 90° gedreht wird und eine Aufnahme des zu untersuchenden Objekts aufnimmt, die im wesentlichen senkrecht zu den Aufnahmen der vorher aufgenommenen Bild-Teilbereiche liegt.

Das Verfahren ist derart gestaltet, daß das zu untersuchende Objekt zunächst senkrecht zur Aufnahmerichtung zeilenweise aufgenommen wird und daß dann die Ausdehnung des Objekts derart bestimmt wird, als eine Aufnahme eines Auswerte-Teilbereichs ausgewertet wird, der im wesentlichen senkrecht zu den vorher aufgenommenen Bild-Teilbereichen liegt. Nachdem die Ausdehnung des Objekts längs der Aufnahmerichtung definiert ist, können die einzelnen "Schichten" in gleichmäßigen Abständen zueinander "aufeinandergeschichtet" werden, so daß sich dadurch ein realitätstreues Bild des zu untersuchenden Objekts ergibt. In vorteilhafter Weise bleibt das Objekt während des Scannvorgangs in Ruhe. Die Reihenfolge der Aufnahme der Bild-Teilbereiche und des Auswerte-Teilbereichs spielt keine Rolle.

Um eine besonders realitätstreue Abbildung des Objekts zu erhalten, empfiehlt es sich, den Ultraschallsender und/oder den Ultraschallempfänger bzw. den Ultraschallkopf längs der Aufnahmerichtung mit einer gleichmäßigen Geschwindigkeit zu verfahren.

Darüber hinaus lassen sich jedoch mit dem erfindungsgemäßen Verfahren auch unterschiedliche Abstände der aufgenommenen Bild-Teilbereiche des zu untersuchenden Objekts durch die Auswertung der Aufnahme des Auswerte-Teilbereichs bestimmen. Dies geschieht durch einen Vergleich der Strukturen des Auswerteteilbereichs mit den Strukturen der einzelnen Bild-Teilbereiche, die zuvor aufgenommen und abgespeichert wurden. Die entsprechend ausgewerteten Grauwerte bzw. Farbwerte der einzelnen Schichten (abhängig von dem verwendeten Ultraschallgerät), d.h. der einzelnen Bild-Teilbereiche des Objekts, repräsentieren die Oberflächenstruktur einer jeden Schicht des Objekts. Durch Vergleich dieser Oberflächenstruktur mit der Oberflächenstruktur des Auswerte-Teilbereichs, d.h. durch den Vergleich der "Zeilen"-Struktur mit der "Spalten"-Struktur kann man bei Übereinstimmung der entsprechenden Strukturen die Schnittpunkte der einzelnen Bild-Teilbereiche, d.h. der einzelnen Schichten mit dem Auswerte-Teilbereich feststellen. Dadurch lassen sich die einzelnen Bild-Teilbereiche untereinander zuordnen, d.h. die einzelnen Schichten des zu untersuchenden Objekts lassen sich anhand dieser Schnittpunkte sowohl vertikal als auch horizontal anordnen, so daß sich ein realitätstreues und unverzerrtes Bild des Objekts ergibt.

Die Tiefeninformationen der Ultraschallwellen, die von den Bild-Teilbereichen und/oder vom Auswerte-Teilbereich reflektiert werden, erhält man dadurch, daß man zunächst eine zu einer zur Aufnahmerichtung parallelen Referenzebene im wesentlichen senkrecht stehende Richtung definiert und längs dieser Richtung die unterschiedlichen Grauwertinformationen des Ultraschallbildes auswertet. Dadurch ergeben sich die reliefartigen Oberflächenstrukturen des zu untersuchenden Objekts.

Das erfindungsgemäße Verfahren läßt sich auch für die realitätstreue Abbildung von dreidimensionalen Gegenständen verwenden, in dem die einzelnen Querschnitte, d.h. die einzelnen "Schichten" des Objekts anhand des entsprechenden Längsschnittes, d.h. des Auswerte-Teilbereichs des Objekts ausgerichtet werden.

Anhand der Zeichnungen wird ein besonderes Ausführungsbeispiel der vorliegenden Erfindung näher beschrieben. Dabei zeigen:
- Figur 1: einen Querschnitt durch ein Ultraschall-Abtastgerät während des Scannvorganges;
- Figur 2: die Bestimmung der Tiefeninformationen eines Bild-Teilbereichs eines Schnitts A-A nach Figur 1;
- Figur 3: ein Ultraschallbild eines Fötuskopfes während des Scannvorganges; und
- Figur 4: einen Querschnitt durch ein Ultraschall-Abtastgerät während der Aufnahme des Auswerte-Teilbereichs.

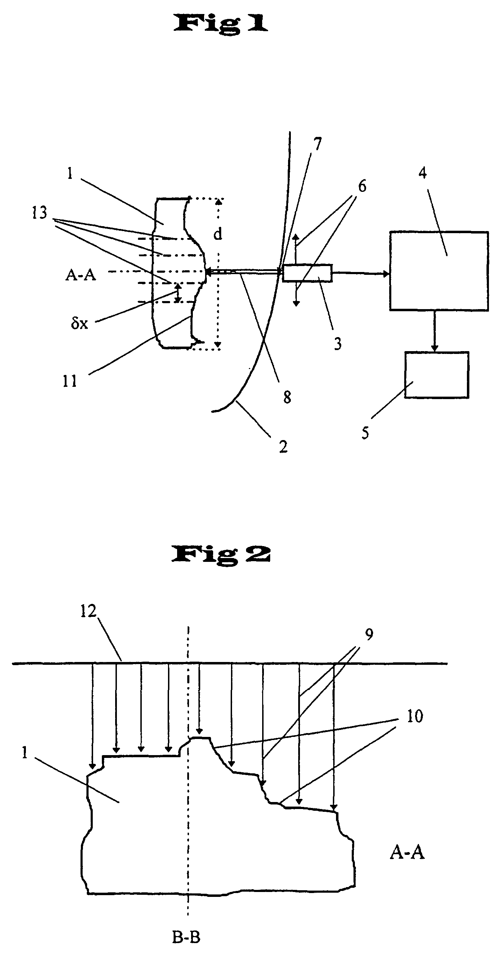

Figur 1 zeigt den Querschnitt durch ein Ultraschall-Abtastgerät während des Scannvorganges. Ein Objekt 1, welches sich innerhalb eines Körpers 2 befindet, wird von einem Ultraschallkopf 3 abgetastet. Der Ultraschallkopf 3 ist mit einem Datenverarbeitungssystem 4 verbunden, welches die verarbeiteten Ultraschallbilder an einem Anzeigegerät 5 anzeigt. Das Datenverarbeitungssystem 4 (oder ein hier nicht dargestelltes Steuersystem) liefert die entsprechenden Signale zur Ansteuerung des Ultraschallkopfes 3 und weist Eingänge für die empfangenen Ultraschallsignale des Ultraschallkopfes 3 auf. Der Ultraschallkopf 3, welcher einen Ultraschallsender und einen Ultraschallempfänger aufweist, sendet Ultraschallwellen 8 durch ein Schallmedium 7 und durch die Wandung des Körpers 2 in Richtung auf das Objekt 1, welches die Ultraschallwellen 8 reflektiert und in Richtung des Ultraschallkopfes 3 zurückwirft. Der Ultraschallkopf 3 empfängt die vom Objekt 1 reflektierten Ultraschallwellen 8 und sendet die empfangenen Daten zum Datenverarbeitungssystem 4.

Zur Aufnahme eines Bild-Teilbereichs 13 bleibt der Ultraschallkopf 3 in Ruhe oder weist eine gegenüber der Schallgeschwindigkeit vernachlässigbare Verfahr-Geschwindigkeit auf, bis er die reflektierten Ultraschallwellen 8 zum Datenverarbeitungssystem 4 weitergeleitet hat. Anschließend verfährt der Ultraschallkopf 3 in eine Aufnahmerichtung 6, um den nächsten Bild-Teilbereich 13 des Objekts 1 aufzunehmen. Die einzelnen Bild-Teilbereiche 13 weisen einen Abstand δx zueinander auf. Dieser Abstand δx kann im Falle einer gleichmäßigen Verfahrgeschwindigkeit des Ultraschallkopfes 3 in der Aufnahmerichtung 6 äquidistant sein oder im Falle einer nicht gleichmäßigen Verfahrgeschwindigkeit des Ultraschallkopfes 3 können die einzelnen Abstände δx der Bildteilbereiche 13 auch variieren.

Als Ultraschallmedium 7 zwischen dem Ultraschallkopf 3 und der Wandung des Körpers 2 eignen sich die bekannten Schallmedien, wie beispielsweise Öl, Wasser, Gel oder ähnliche. Die Spaltenstruktur (Außenkontur in Aufnahmerichtung 6) 11 erstreckt sich längs der Ausdehnung d des Objekts 1 in Aufnahmerichtung 6.

Die einzelnen "Schichte"-Aufnahmen, d.h. die einzelnen Bild-Teilbereiche 13 des Objekts 1 werden in dem Datenverarbeitungssystem 4 zwischengespeichert, wobei hier die entsprechenden Tiefeninformationen 9 nach Figur 2 berechnet werden.

Figur 2 zeigt den Schnitt A-A durch das Objekt 1 nach Figur 1, d.h. einen horizontalen Schnitt durch das Objekt 1. Gemäß einer in dem Datenverarbeitungssystem 4 definierten Referenzebene 12, die parallel zur Aufnahmerichtung 6 angeordnet ist, werden die einzelnen Abstände der Zeilenstrukturen 10 (d.h. der horizontalen Strukturen der einzelnen Schichten des Objekts 1) berechnet. Dies geschieht durch die Auswertung von vordefinierten oder zu errechnenden Grauwertstufen (Treshhold), die verschiedene stärker oder schwächer verdichtete Materialbereiche des Objekts 1 wiedergeben. Je nach Dichte des Materials innerhalb des Objekts 1 ergeben sich durch die Auswertung der reflektierten Ultraschallwellen 8 im Datenverarbeitungssystem 4 unterschiedliche Grauwerte anhand derer sich die Oberflächenstrukturen (hier: Zeilenstruktur 10) bestimmen lassen. Die Tiefeninformationen 9 definieren die dritte Dimension des Objekts 1, welche sich anhand geeigneter computergestützter Anzeigegeräte 5 darstellen läßt.

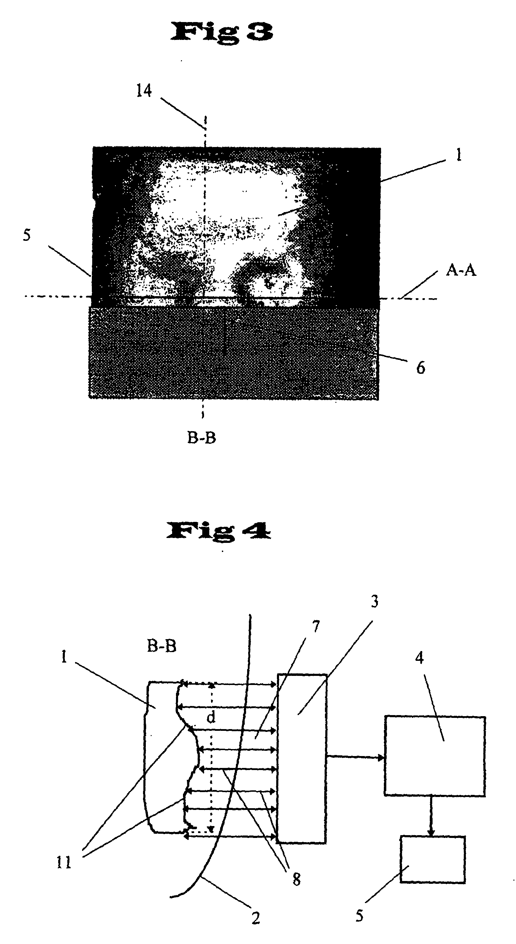

Figur 3 zeigt den Aufbau eines dreidimensionalen Ultraschallbildes während des Scannvorganges des Ultraschallkopfes 3 an einem Anzeigegerät 5, wobei hier die einzelnen Bild-Teilbereiche 13 nacheinander "aufeinandergeschichtet" dargestellt werden, wobei die nach Figur 2 errechneten Tiefeninformationen 9 bereits durch geeignete Darstellungsmittel enthalten sind. Figur 3 zeigt auch den Schnitt A-A nach Figur 1.

Ein derartiges Ultraschallbild wird durch zeilenweises Scannen des zu untersuchenden Objekts 1 in Aufnahmerichtung 6 erstellt. Zur Bestimmung der Ausdehnung d des Objekts 1 bzw. zur Bestimmung der einzelnen Abstände δx der Bild-Teilbereiche 13 wird das nach Figur 3 zusammengesetzte Bild nochmals in mindestens einer zur Aufnahmerichtung 6 im wesentlichen senkrechten Richtung gescannt. Der Auswerte-Teilbereich 14, welcher nach Figur 3 senkrecht auf dem Schnitt A-A nach Figur 1 steht, liefert die notwendigen Informationen zur Kalibrierung der einzelnen Bild-Teilbereiche 13 und zur exakten "Schichtung" der bereits gespeicherten und mit den entsprechenden Tiefeninformationen 9 versehenen Bild-Teilbereiche 13. Durch die Auswertung des Auswerte-Teilbereichs 14, d.h. durch die Detektion der entsprechenden Strukturen des Objekts 1 längs des Schnitts B-B nach Figur 3, lassen sich durch Vergleich dieser Strukturen mit den entsprechenden Strukturen der horizontalen Bild-Teilbereiche 13 diese Bild-Teilbereiche 13 untereinander zuordnen.

Figur 4 zeigt den Schnitt durch den um ca. 90° gedrehten Ultraschallkopf 3 nach Figur 1, der den Auswerte-Teilbereich 14 nach Schnitt B-B gemäß Figur 3 aufnimmt. Die dadurch erhaltene Spaltenstruktur 11 des Auswerte-Teilbereichs 14 wird vom Ultraschallkopf 3 zum Datenverarbeitungssystem 4 weitergeleitet. Das Datenverarbeitungssystem 4 vergleicht die Spaltenstruktur 11 mit den Zeilenstrukturen 10 der Bild-Teilbereiche 13 und kalibriert dadurch die gespeicherte Sequenz der entsprechenden Bild-Teilbereiche 13. Anschließend werden die Bild-Teilbereiche 13 entsprechend der Kalibrierung untereinander zugeordnet und es ergibt sich ein realitätstreues, d.h. unverzerrtes Abbild des zu untersuchenden Objekts 1, d.h. beispielsweise des Fötuskopfes nach Figur 3.

## Patentansprüche

1. Verfahren zur Aufnahme von Ultraschallbildern eines Objekts (1),
mit einem Utraschallsender zur Abstrahlung von Ultraschallwellen auf das Objekt (1), und
einem Ultraschallempfänger zum Empfangen von von dem Objekt (1) reflektierten Ultraschallwellen,
wobei der Ultraschallsender und/oder der Ultraschallempfänger zur Aufnahme von einzelnen Bild-Teilbereichen (13) des Objekts (1) entlang dem Objekt (1) verfahren wird, und
die Abstände (δx) der einzelnen Bild-Teilbereiche (13) untereinander und/oder die Ausdehnung (d) des Objekts (1) längs der Aufnahmerichtung (6) zur Darstellung des Objekts (1) bestimmt werden,
**dadurch gekennzeichnet,**
**daß** zur Bestimmung der Abstände (δx) der Bild-Teilbereiche (13) untereinander und/oder zur Bestimmung der Ausdehnung (d) des Objekts (1) eine Aufnahme eines Auswerte-Teilbereichs (14) des Objekts (1) erstellt und ausgewertet wird, wobei
die Aufnahme des Auswerte-Teilbereichs (14) einen Bereich des Objekts (1) abbildet, der mindestens zwei Bild-Teilbereiche (13) überschneidet.

2. Verfahren nach Anspruch 1,
**dadurch gekennzeichnet,**
**daß** das Objekt (1) durch senkrecht zur Bewegungsrichtung (6) des Ultraschallwandlers (3) gerichtete Bild-Teilbereiche (13) zeilenweise aufgenommen wird, und
**daß** die Ausdehnung (d) des Objekts (1) und/oder die Abstände (δx) der Bild-Teilbereiche (13) untereinander durch die Auswertung einer Aufnahme eines Auswerte-Teilbereichs (14) bestimmt werden, der im wesentlichen orthogonal zu den Bild-Teilbereichen (13) gerichtet ist.

3. Verfahren nach Anspruch 1 oder 2,
**dadurch gekennzeichnet,**
**daß** der Ultraschallsender und/oder der Ultraschallempfänger längs seiner Bewegungsrichtung (6) mit gleichmäßiger Geschwindigkeit verfahren wird.

4. Verfahren nach einem der vorhergehenden Ansprüche,
**dadurch gekennzeichnet,**
**daß** zur Bestimmung einer Ausdehnung (d) des Objekts (1) und/oder von Abständen (δx) der Bild-Teilbereiche (13) Aufnahmen von einem Auswerte-Teilbereich (14), der die Spaltenstruktur (11) des Objekts (1) wiedergibt, verwendet werden, die mit den Aufnahmen einzelner Bild-Teilbereiche (13), die die Zeilenstrukturen (1.0) des Objekts (1) wiedergeben, an den Schnittstellen der Bild-Teilbereiche (13) und des Auswerte-Teilbereichs (14) übereinstimmen.

5. Verfahren nach einem der vorhergehenden Ansprüche,
**dadurch gekennzeichnet,**
**daß** Tiefeninformationen (9) der Ultraschallwellen, die von den Bild-Teilbereichen (13) und/oder vom Auswerte-Teilbereich (14) reflektiert werden, zur Bestimmung der Oberflächenstrukturen (10, 11) des Objekts (1) verwendet werden,
wobei die Tiefeninformationen (9) in einer Richtung bestimmt werden, die zu einer zur Bewegungsrichtung (6) des Ultraschallwandlers (3) parallelen Referenzebene (12) im wesentlichen senkrecht steht.

6. Verfahren nach einem der vorhergehenden Ansprüche,
**dadurch gekennzeichnet,**
**daß** die Bilder, die aus den Bild-Teilbereichen (13) gebildet werden, während der Aufnahme des Objekts (1) in Echtzeit verarbeitet und/oder angezeigt werden.

7. Verfahren nach einem der vorhergehenden Ansprüche,
**dadurch gekennzeichnet,**
**daß** das Objekt (1) in einem Körper (2) aufgenommen wird.

8. Vorrichtung für ein Verfahren nach einem der vorhergehenden Ansprüche,
**dadurch gekennzeichnet,**
**daß** der Ultraschallsender und der Ultraschallempfänger in einem Ultraschallkopf (3) integriert sind.

9. Vorrichtung nach Anspruch 8,
**dadurch gekennzeichnet,**
**daß** ein Datenverarbeitungssystem (4) und/oder das Ultraschallgerät die Ultraschallbilder verarbeitet und ein Anzeigegerät (5) die resultierenden Bilder anzeigt.

## Claims

1. Method of ultrasound imaging of an object (1), comprising
an ultrasonic transmitter for transmitting ultrasonic waves on the object (1), and
an ultrasonic receiver for receiving ultrasonic waves reflected on the object (1),
wherein said ultrasonic transmitter and/or said ultrasonic receiver is/are moved along said object (1) for imaging separate partial image regions (13) of said object (1), and
the distances (δx) by which said separate partial image regions (13) are spaced from each other, and/or the extension (d) of said object (1) are/is detected along the imaging direction (6) for the representation of said object (1),
**characterised in**
**that** imaging of a partial analysis region (14) of said object (1) is carried out and evaluated for the detection of said distances (δx) by which said partial image regions (13) are spaced from each other, and/or for the detection of the extension (d) of said object (1),
with the image taken of said partial analysis region (14) constituting the image of a zone of said object (1) that overlaps at least two partial image regions (13).

2. Method according to Claim 1,
**characterised in**
**that** said object (1) is imaged by lines through partial image regions (13), which are oriented orthogonally on the direction of movement (6) of the ultrasonic transducer (3), and
**that** the extension (d) of said object (1) and/or the distances (δx) by which said partial image regions (13) are spaced from each other are detected by analysing an image taken of a partial analysis region (14), which is substantially directed in a direction orthogonal on said partial image regions (13).

3. Method according to Claim 1 or 2,
**characterised in**
**that** said ultrasonic transmitter and/or said ultrasonic receiver is/are moved along the direction of movement (6) at a constant rate.

4. Method according to any of the preceding Claims,
**characterised in**
**that** the images taken of a partial analysis region (14), which represents the column structure (11) of said object (1), are used for detecting an extension (d) of said object (1) and/or of distances (δx) of said partial image regions (13), which images are in congruence with the images taken of individual partial image regions (13) representing the line structures (10) of said object (1) at the interfaces of said partial image regions (13) and of said partial analysis region (14).

5. Method according to any of the preceding Claims,
**characterised in**
**that** the information of depth (9) of said ultrasonic waves, which are reflected on said partial image regions (13) and/or on said partial analysis region (14), is used in order to detect the surface structures (10, 11) of said object (1),
with said information of depth (9) being detected in a direction orthogonal on a reference plane (12) parallel to the direction of movement (6) of said ultrasonic transducer (3).

6. Method according to any of the preceding Claims,
**characterised in**
**that** the images produced of said partial image regions (13) are processed and/or displayed in real time in the course of the operation of imaging said object (1).

7. Method according to any of the preceding Claims,
**characterised in**
**that** said object (1) is imaged in a body.

8. Device for a method according to any of the preceding Claims,
**characterised in**
**that** said ultrasonic transmitter and said ultrasonic receiver are integrated into an ultrasonic head.

9. Device according to Claim 8,
**characterised in**
**that** a data-processing system and/or the ultrasonic device process the ultrasonic images, and that a display device (5) displays the resulting images.

## Revendications

1. Procédé de prise d'images ultrasoniques d'un objet (1), comprenant
un émetteur d'ultrasons à émettre des ondes ultrasonores sur l'objet (1), et
un récepteur d'ultrasons à recevoir des ondes ultrasonores réfléchies sur l'objet (1),
dans lequel ledit émetteur d'ultrasons et/ou ledit récepteur d'ultrasons est/sont déplacé(s) le long dudit objet (1) pour la prise d'images des plages partielles séparées de l'image (13) dudit objet (1), et
les distances (δx), par lesquelles lesdites plages partielles séparées de l'image (13) sont écartées l'une de l'autre, et/ou l'étendue (d) dudit objet (1) sont/est détectée(s) le long du sens de prise d'images (6) pour la représentation dudit objet (1),
**caractérisé en ce**
**qu'**une image prise d'une plage partielle d'analyse (14) dudit objet (1) est produite et évaluée pour la détection desdites distances (δx), par lesquelles lesdites plages partielles d'image (13) sont écartées l'une de l'autre, et/ou pour la détection de l'étendue (d) dudit objet (1),
l'image prise de ladite plage partielle d'analyse (14) faisant l'image d'une zone dudit objet (1), qui chevauche au moins deux plages partielles d'image (13).

2. Procédé selon la revendication 1,
**caractérisé en ce**
**que** l'image dudit objet (1) est prise par lignes par plages partielles d'image (13) dirigées orthogonalement sur le sens de mouvement (6) du transducteur ultrasonore (3), et
en ce que l'étendue (d) dudit objet (1) et/ou les distances (δx), par lesquelles lesdites plages partielles d'image (13) sont écartées l'une de l'autre, sont détectées par l'analyse d'une image prise d'une plage partielle d'analyse (14), qui est dirigées essentiellement en sens orthogonal sur lesdites plages partielles d'image (13).

3. Procédé selon la revendication 1 ou 2,
**caractérisé en ce**
**que** ledit émetteur d'ultrasons et/ou ledit récepteur d'ultrasons est/sont déplacé(s) le long de son sens de mouvement (6) à une vitesse constante.

4. Procédé selon une quelconque des revendications précédentes,
**caractérisé en ce**
**que** des images prises d'une plage partielle d'analyse (14), qui représente la structure à colonnes (11) dudit objet (1), sont utilisées pour la détection d'une étendue (d) dudit objet (1) et/ou des distances (δx) desdites plages partielles d'image (13), lesquelles images se trouvent en correspondance avec les images prises des plages partielles d'image individuelles (13), qui représentent les structures à lignes (10) dudit objet (1), aux interfaces desdites plages partielles d'image (13) et de ladite plage partielle d'analyse (14).

5. Procédé selon une quelconque des revendications précédentes,
**caractérisé en ce**
**que** des informations de profondeur (9) desdites ondes ultrasonores, qui sont réfléchies sur lesdites plages partielles d'image (13) et/ou sur ladite plage partielle d'analyse (14), sont utilisées afin de détecter les structures superficielles (10, 11) dudit objet (1),
lesdites informations de profondeur (9) étant détectées en un sens orthogonal sur un plan de référence (12) en parallèle au sens de mouvement (6) dudit transducteur ultrasonore (3).

6. Procédé selon une quelconque des revendications précédentes,
**caractérisé en ce**
**que** les images formées à la base desdites plages partielles d'image (13) sont traitées et/ou affichées au cours de la prise d'image dudit objet (1) en temps réel.

7. Procédé selon une quelconque des revendications précédentes,
**caractérisé en ce**
**que** l'image dudit objet (1) est prise dans un corps.

8. Dispositif pour un procédé selon une quelconque des revendications précédentes,
**caractérisé en ce**
**que** ledit émetteur d'ultrasons et ledit récepteur d'ultrasons sont intégrés dans une tête aux ultrasons.

9. Dispositif selon la revendication 8,
**caractérisé en ce**
**qu'**un système de traitement de données (4) et/ou le dispositif aux ultrasons traite les images ultrasonores et qu'un dispositif d'affichage (5) affiche les images en résultant.
